# FASCICULE DE BREVET EUROPEEN

(11) **EP 4 405 234 B1**
(45) Date de publication et mention de la délivrance du brevet: **06.08.2025**
(21) Numéro de dépôt: 22773754.1
(22) Date de dépôt: 31.08.2022
(51) Int. Cl.: B62D 25/08, B62D 29/04

(54) **TRAVERSE SUPÉRIEURE DE FAÇADE AVANT POUR VÉHICULE AUTOMOBILE**
OBERER QUERTRÄGER FÜR EIN VORDERFRONT EINES KRAFTFAHRZEUGS
FRONT END UPPER CROSSMEMBER FOR MOTOR VEHICLE

(30) Priorité: 21.09.2021 FR 2109919
(43) Date de publication de la demande: 31.07.2024
(73) Titulaire: Stellantis Auto SAS, 78300 Poissy (FR)
(72) Inventeur: GOURVENNEC, Thibault, 91210 DRAVEIL (FR); PERON, Rodolphe, 95220 HERBLAY (FR); ROYER, Guillaume, 91680 BRUYERES LE CHATEL (FR)
(74) Mandataire: BCIP
(86) Numéro de dépôt international: PCT/FR2022/051635
(87) Numéro de publication internationale: WO 2023/047031

(56) Documents cités:
- EP-A1- 0 546 352
- JP-A- 2021 024 412
- US-A1- 2017 320 456
- US-B2- 9 381 946

## Description

### [Domaine technique]

La présente invention revendique la priorité de la demande française 2109919 déposée le 21 septembre 2021.

La présente invention concerne d'une manière générale les traverses supérieures de façade avant pour véhicules automobiles. Elle vise en particulier une telle traverse supérieure de façade avant comportant au moins une interface d'attache pour capteur de chocs.

### [Technique antérieure]

Les véhicules automobiles sont équipés traditionnellement de dispositifs de coussins gonflables de type frontaux destinés à protéger les occupants en cas de survenance d'une collision frontale.

Ces coussins gonflables sont configurés pour se déployer dans l'habitacle du véhicule en réponse à la détection d'une telle collision frontale par un ou plusieurs capteurs de chocs frontaux implantés dans la partie avant de ce véhicule.

Les réglementations imposées aux véhicules étant différentes en fonction des pays ou régions, le nombre et le lieu d'implantation de ces capteurs de chocs frontaux varient donc suivant la zone géographique dans laquelle le véhicule doit être commercialisé.

Le marché nord-américain impose ainsi la présence de deux capteurs de chocs frontaux écartés latéralement, tandis que le marché européen n'exige qu'un seul capteur implanté à proximité du plan longitudinal vertical médian du véhicule.

Par ailleurs, ce ou ces capteurs de choc doivent être installés sur un élément présentant une certaine rigidité afin d'éviter tout risque de déclenchement intempestif du coussin gonflable du fait des vibrations de cette pièce durant les phases de roulage du véhicule.

En outre, ce ou ces capteurs doivent être situés sur des pièces subissant des déformations dès le début de la collision frontale afin que les dispositifs de coussins gonflables puissent se déployer suffisamment tôt pour protéger efficacement les occupants du véhicule.

Pour toutes ces raisons, il est connu de les implanter sur la façade avant du véhicule constituant un module structurel livré d'un seul bloc prêt à être monté au constructeur automobile et destiné à intégrer divers équipements tels que le bloc radiateur, le groupe moto-ventilateur, la ou les serrures de capot, les projecteurs, les clignotants, etc....

Une telle façade avant de véhicule comprend classiquement une traverse supérieure disposée horizontalement à l'avant du véhicule, ainsi que deux jambages latéraux s'étendant verticalement et dont les extrémités supérieures sont reliées fixement aux extrémités latérales de la traverse supérieure.

La façade avant peut également comporter parfois une traverse inférieure disposée horizontalement en étant reliée fixement par ses deux extrémités latérales aux deux extrémités inférieures des jambages latéraux.

Il est connu de prévoir une interface de fixation pour un tel capteur de chocs sur chacun des jambages latéraux de cette façade avant, ce qui permet notamment de satisfaire les exigences du marché nord-américain.

Une telle interface de fixation, divulguée notamment dans le document JP 2021024412 A, comporte :
- un écrou implanté au niveau d'un orifice ménagé dans une paroi du jambage de sorte à permettre la fixation par boulonnage du capteur de chocs, et
- un trou oblong de pré-positionnement et d'indexage implanté sur ladite paroi à proximité dudit écrou et prévu pour recevoir une protubérance de forme complémentaire agencée sur ce même capteur de chocs.

Toutefois, le positionnement de ces interfaces de fixation sur les jambages latéraux de la façade avant n'est pas adapté pour les véhicules du marché européen dans lesquels l'unique capteur de chocs frontaux doit être implanté à proximité du plan longitudinal vertical médian du véhicule.

Sur ces véhicules, il est donc connu de prévoir une telle interface de fixation pour un capteur de chocs sur la traverse supérieure de la façade avant du véhicule.

Ainsi, suivant la région de commercialisation du véhicule, on utilise des références différentes de jambages latéraux et de traverse supérieure de façade avant, ce qui entraîne une augmentation sensible des coûts de stockage et de gestion logistique.

### [Exposé de l'invention]

La présente invention vise donc à améliorer la situation.

Elle propose à cet effet une traverse supérieure de façade avant pour véhicule automobile destinée à s'étendre horizontalement à l'avant dudit véhicule et comportant au moins une interface d'attache pour capteur de chocs, la au moins une interface d'attache comprenant :
- un écrou implanté au niveau d'un orifice ménagé dans une paroi de ladite traverse de sorte à permettre la fixation par boulonnage d'un dit capteur de chocs, et
- un trou oblong de pré-positionnement et d'indexage implanté sur ladite paroi à proximité dudit écrou et prévu pour recevoir une protubérance de forme complémentaire agencée sur ce même capteur de chocs ;
caractérisé en ce que ladite traverse comporte une première dite interface d'attache ménagée dans sa partie centrale et des deuxième et troisième dites interfaces d'attache ménagées respectivement à chacune de ses deux extrémités latérales.

La présence de ces trois interfaces d'attache sur la traverse supérieure de façade selon l'invention permet de répondre aux différentes spécificités d'implantation du ou des capteurs de chocs frontaux auxquelles les constructeurs automobiles doivent se plier pour satisfaire aux réglementations en vigueur dans les différents marchés de commercialisation visés (en particulier, les marchés européen et nord-américain).

Ainsi, une même référence de traverse supérieure de façade avant standardisée et peut être utilisée pour différents marchés, ce qui engendre des économies d'échelle importantes et entraîne également une réduction non négligeable des coûts de gestion et de stockage des pièces détachées.

Il en est également de même pour les jambages latéraux de façade avant qui n'ont plus à présenter de telles interfaces d'attache puisque l'ensemble des interfaces nécessaires sont présentes sur la traverse supérieure.

Selon des caractéristiques préférées de ladite traverse supérieure de façade avant selon l'invention :
- la première dite interface d'attache est agencée sensiblement au niveau du plan longitudinal vertical médian de ladite traverse ;
- lesdites deuxième et troisième interfaces d'attache sont agencées sensiblement symétriquement vis-à-vis du plan longitudinal vertical médian de ladite traverse ;
- l'écrou de chaque dite interface d'attache est serti dans un dit orifice correspondant ;
- ladite traverse comporte un corps principal venu de moulage d'une seule pièce à partir d'un matériau thermoplastique chargé avantageusement en fibres naturelles et/ou synthétiques ;
- ladite traverse comporte des moyens aptes à guider le cheminement, le long d'au moins une partie de cette traverse, d'au moins un faisceau électriques destiné à venir se brancher sur un dit au moins un capteur de chocs ; et/ou
- lesdits moyens de guidage comportent une pluralité d'encoches ménagées dans des parois de ladite traverse.

L'invention vise également sous un second aspect un sous-ensemble comportant une telle traverse supérieure de façade avant et au moins un dit capteur de chocs monté fixement sur une dite interface d'attache.

L'invention vise également sous un troisième aspect une façade avant de véhicule automobile comportant une telle traverse supérieure destinée à s'étendre horizontalement à l'avant dudit véhicule, ainsi que deux jambages latéraux prévus pour s'étendre verticalement et dont les extrémités supérieures sont reliées fixement aux extrémités latérales de ladite traverse supérieure.

L'invention vise enfin sous un quatrième aspect un véhicule automobile comportant une telle façade avant.

### [Brève description des dessins]

L'exposé de l'invention sera maintenant poursuivi par la description détaillée de plusieurs exemples de réalisation, donnée ci-après à titre illustratif mais non limitatif, en référence aux dessins annexés, sur lesquels :
[Fig 1] est une vue en perspective de trois quart avant d'une façade avant pour véhicule automobile comprenant une traverse supérieure selon l'invention ;
[Fig 2] représente une vue de trois quart arrière de la traverse supérieure de façade avant selon l'invention ;
[Fig 3] est une vue de trois quart arrière de la traverse supérieure de façade avant selon l'invention sur la partie centrale de laquelle est implanté un unique capteur de chocs frontaux tel qu'exigé par la réglementation européenne ;
[Fig 4] représente un agrandissement du détail IV de la figure 3 correspondant à la zone d'implantation du capteur de chocs frontaux ;
[Fig 5] est une vue de trois quart arrière de la zone d'implantation du capteur de chocs frontaux de la traverse de la figure 3 ; et
[Fig 6] représente une vue de trois quart arrière de la traverse supérieure de façade avant selon l'invention sur les extrémités latérales de laquelle sont implantés deux capteurs de chocs frontaux tel qu'exigé par la réglementation nord-américaine.

### [Description détaillée]

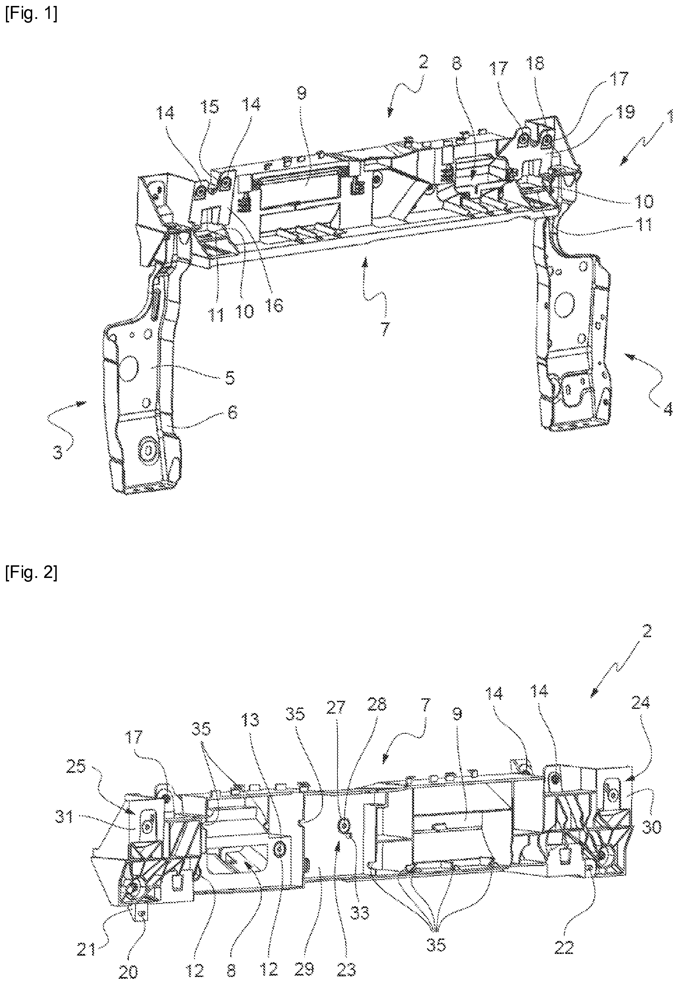

La figure 1 représente une façade avant 1 pour véhicule automobile constituant un module structurel livré d'un seul bloc prêt à être monté au constructeur automobile et destiné à intégrer divers équipements tels que le bloc radiateur, le groupe moto-ventilateur, le ou les serrures de capot, les projecteurs, les clignotants, etc...

La façade avant 1 comporte une traverse supérieure 2 selon l'invention disposée horizontalement à l'avant du véhicule, ainsi que deux jambages latéraux 3, 4 s'étendant verticalement et dont les extrémités supérieures sont reliées fixement aux extrémités latérales de la traverse supérieure 2.

Dans la description qui va suivre et par convention, les termes « inférieur », « supérieur », « longitudinal », « latéral » et « transversal » seront définis par rapport à la position de montage de cette façade avant sur un tel véhicule en configuration fermée du capot.

Réalisés à partir d'une feuille de tôle découpée et pliée, les jambages latéraux 3, 4 sont destinés à se retrouver adjacents aux projecteurs du véhicule, de sorte à servir de point d'ancrage pour ces projecteurs.

Chaque jambage latéral 3, 4 comprend une paroi principale 5 s'étendant sensiblement suivant un plan vertical transversal et étant bordée par un bord tombé périphérique 6 saillant à l'avant de cette paroi 5.

Représentée seule en perspective de trois quart arrière sur la figure 2, la traverse supérieure 2 selon l'invention comporte un corps principal allongé 7 venu de moulage d'une seule pièce à partir d'un matériau thermoplastique tel que le polypropylène (PP), chargé avantageusement en fibres naturelles et/ou synthétiques afin d'améliorer sa tenue mécanique.

Ce corps principal 7 présente une fenêtre d'admission d'air 8 destinée à être reliée au circuit d'admission d'air du moteur du véhicule afin d'assurer son alimentation en air frais.

La traverse supérieure 2 comprend également un clapet d'admission d'air 9 monté pivotant selon un axe transversal sur le corps principal 7 et destiné à être relié au compartiment moteur.

Sollicité vers sa position de fermeture par des moyens élastiques de rappel, ce clapet 9 est ainsi configuré pour ne s'ouvrir que lorsque le véhicule circule à une vitesse supérieure ou égale à une vitesse prédéterminée (par exemple, 10 à 15 km/h) afin de refroidir certains organes implantés sous le capot du véhicule tels que le moteur et/ou le système de climatisation de l'habitacle.

Cette traverse supérieure 2 comporte également différents moyens d'attache permettant d'assurer la fixation de divers équipements du véhicule, à savoir :
- des moyens d'attache pour la fixation du bloc radiateur et du groupe moto-ventilateur du véhicule, ces derniers comprenant deux trous oblongs 10 ménagées à proximité des deux extrémités latérales de la traverse 2 sur deux parois horizontales 11 du corps principal 7 et agencées symétriquement vis-à-vis du plan médian de cette traverse 2 ;
- des moyens d'attache pour la fixation du filtre à air du véhicule, ces derniers étant constituées en l'espèce par deux écrous 12 sertis dans des orifices 13 ménagés sur le pourtour de la fenêtre d'admission d'air 8 ;
- des moyens d'attache pour la fixation d'une première serrure de capot du véhicule, ces derniers comprenant deux écrous 14 sertis dans des orifices 15 ménagés sur une paroi 16 s'étendant selon un plan sensiblement vertical transversal à proximité d'une extrémité latérale de la traverse 2 ;
- des moyens d'attache pour la fixation d'une seconde serrure de capot du véhicule, ces derniers comprenant également deux écrous 17 sertis dans des orifices 18 ménagés sur une paroi 19 s'étendant selon un plan sensiblement vertical transversal à proximité de la seconde extrémité latérale de la traverse 2 ;
- des moyens d'attache pour la fixation d'une agrafe de serrage d'un faisceau électrique, ces derniers consistant en un orifice oblong 20 ménagé sur une excroissance 21 du corps principal 7 saillant vers le bas à proximité de l'une des extrémités latérales de la traverse 2 ; et
- des moyens d'attache pour la fixation d'une agrafe de serrage d'un tuyau du circuit de climatisation, ces derniers consistant en un orifice oblong 22 ménagé sur le corps principal 7 à proximité de la seconde extrémité latérale de la traverse 2.

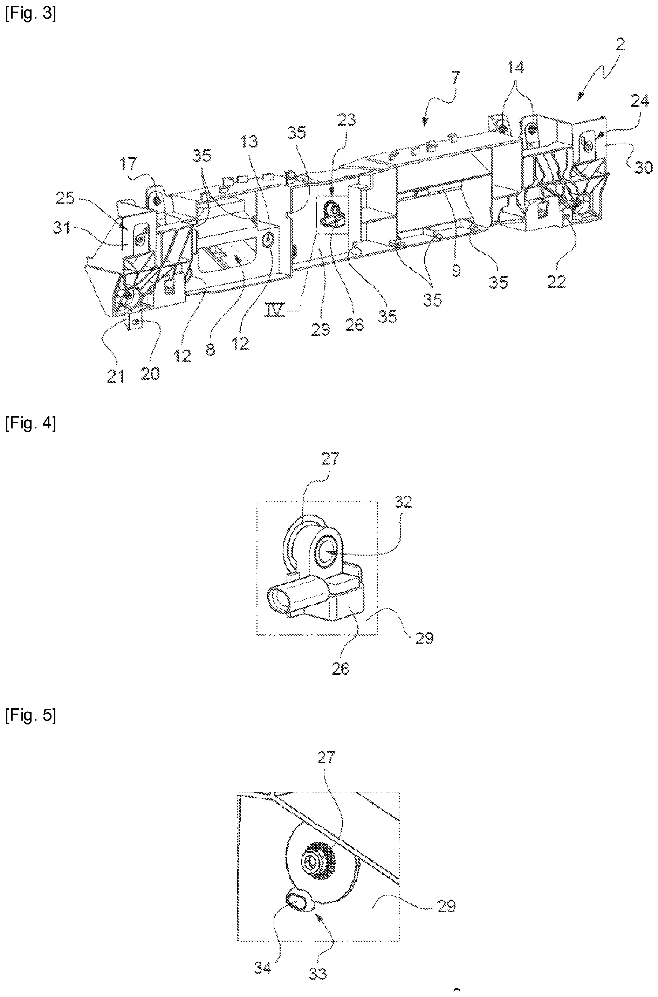

Selon l'invention, la traverse supérieure 2 comporte également trois interfaces d'attaches 23, 24, 25 prévues chacune pour permettre la fixation d'un capteur de chocs 26 (voir figures 3 et 4) assurant le déclenchement des dispositifs de coussins gonflables de type frontaux du véhicule lors de la survenance d'une collision frontale.

Les capteurs de chocs utilisés dans ce cadre sont généralement des accéléromètres non asservis à détection piézoélectrique, piézorésistive ou capacitive.

Chaque interface d'attache 23, 24, 25 comporte un écrou 27 serti dans un orifice respectif 28 ménagé sur une paroi correspondante 29, 30, 31 du corps 7 s'étendant selon un plan sensiblement vertical transversal.

Tel qu'illustré sur les figures 3 à 5, la fixation d'un capteur de chocs 26 est ainsi réalisée par boulonnage via une vis non représentée, introduite préalablement au travers d'un orifice circulaire 32 ménagé dans le capteur 26 puis boulonnée sur un dit écrou 27.

Chaque interface d'attache 23, 24, 25 comporte également un trou oblong 33 prévu pour recevoir par encliquetage une protubérance de forme complémentaire 34 prévue sur un capteur 26, de sorte à assurer :
- d'une part, le pré-positionnement de ce capteur 26 de sorte que son orifice circulaire 32 soit aligné avec l'écrou correspondant 27 de la traverse 2 afin de faciliter l'opération de boulonnage ; et
- d'autre part, l'indexage angulaire de ce même capteur 26 de sorte que son connecteur électrique femelle 34, sur lequel vient se brancher le connecteur mâle d'un faisceau électrique non représenté, soit orienté convenablement (c'est-à-dire suivant la direction de cheminement de la portion d'extrémité de ce câble portant le connecteur mâle).

Tel qu'illustré par les figures 2 et 3, la première interface d'attache 23 est prévue pour être utilisée sur les véhicules destinés à être commercialisés dans les territoires n'exigeant la présence que d'un unique capteur de chocs frontaux, tels qu'en particulier ceux du marché européen.

Cette première interface d'attache 23 est agencée sensiblement au niveau du plan longitudinal vertical médian de la traverse 100.

Par « sensiblement », il faut ici entendre qu'un décalage latéral allant jusqu'à 30 millimètres de part et d'autre de ce plan longitudinal vertical médian de la traverse 100 est autorisé pour l'implantation de cette première interface d'attache 23.

Un tel agencement permet d'assurer une homogénéité du temps de détection par l'unique capteur 26 des chocs frontaux survenant des deux côtés latéraux du véhicule.

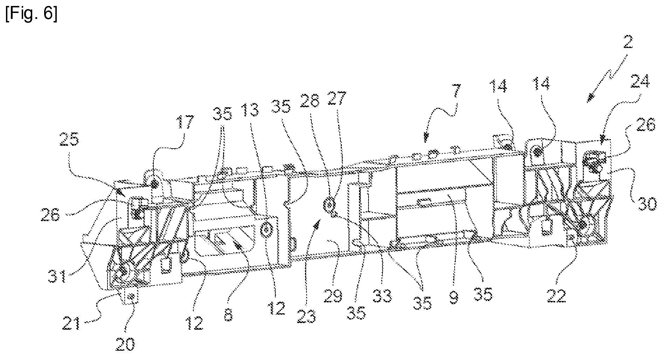

Tel qu'illustré par les figures 2 et 6, les deuxième et troisième interfaces d'attache 24, 25 sont prévues pour être utilisées sur les véhicules destinés à être commercialisés dans les territoires exigeant la présence de deux capteurs de chocs frontaux, tels qu'en particulier ceux du marché nord-américain.

Ces deuxième et troisième interfaces d'attache 24, 25 sont ménagées sensiblement symétriquement vis-à-vis du plan longitudinal vertical médian de la traverse 100.

Par « sensiblement », il faut ici entendre qu'un décalage latéral et/ou en hauteur de plus ou moins 30 millimètres vis-à-vis d'une position strictement symétrique de ces deuxième et troisième interfaces d'attache 24, 25 est autorisé.

Un tel agencement permet d'assurer une homogénéité du temps de détection par l'un ou l'autre des deux capteurs 26 des chocs frontaux survenant des deux côtés latéraux du véhicule.

La traverse supérieure 2 comporte enfin une pluralité d'encoches 35 ménagées dans certaines parois du corps principal 7 et aptes à guider le cheminement le long d'au moins une partie de cette traverse 2 du ou des faisceaux électriques destinés à venir se brancher sur le ou les des capteurs de chocs 26.

Selon des variantes de réalisation non représentées, la traverse supérieure de façade avant peut être métallique, de sorte à améliorer sa rigidité en contrepartie d'une augmentation sensible de sa masse. Dans un tel cas de figure, l'écrou de chaque interface d'attache peut également être soudé sur le pourtour de l'orifice correspondant ménagé dans le corps principal de la traverse.

Selon d'autres variantes, cette traverse supérieure peut être bi-matière et comporter une âme métallique recouverte d'un matériau plastique.

On rappelle enfin que la présente invention ne se limite pas aux formes de réalisation décrites et représentées, mais englobe également toutes les variantes d'exécution à la portée de l'homme du métier.

## Revendications

1. Traverse supérieure (2) de façade avant (1) pour véhicule automobile destinée à s'étendre horizontalement à l'avant dudit véhicule et comportant au moins une interface d'attache (23, 24, 25) pour capteur de chocs (26), la au moins une interface d'attache (23, 24, 25) comprenant :
- un écrou (27) implanté au niveau d'un orifice (28) ménagé dans une paroi (29, 30, 31) de ladite traverse (2) de sorte à permettre la fixation par boulonnage d'un dit capteur de chocs (26) , et
- un trou oblong de pré-positionnement et d'indexage (33) implanté sur ladite paroi à proximité dudit écrou (27) et prévu pour recevoir une protubérance de forme complémentaire (34) agencée sur ce même capteur de chocs (26) ;
**caractérisé en ce que** ladite traverse (2) comporte une première dite interface d'attache (23) ménagée dans sa partie centrale et des deuxième et troisième dites interfaces d'attache (24, 25) ménagées respectivement à chacune de ses deux extrémités latérales.

2. Traverse supérieure (2) de façade avant (1) selon la revendication 1, **caractérisé en ce que** la première dite interface d'attache (23) est agencée sensiblement au niveau du plan longitudinal vertical médian de ladite traverse (2).

3. Traverse supérieure (2) de façade avant (1) selon l'une des revendications 1 ou 2, **caractérisé en ce que** lesdites deuxième et troisième interfaces d'attache (24, 25) sont agencées sensiblement symétriquement vis-à-vis du plan longitudinal vertical médian de ladite traverse (2).

4. Traverse supérieure (2) de façade avant (1) selon l'une des revendications 1 à 3, **caractérisé en ce que** l'écrou (27) de chaque dite interface d'attache (23, 24, 25) est serti dans un dit orifice correspondant (28).

5. Traverse supérieure (2) de façade avant (1) selon l'une des revendications 1 à 4, **caractérisé en ce qu'**elle comporte un corps principal (7) venu de moulage d'une seule pièce à partir d'un matériau thermoplastique chargé avantageusement en fibres naturelles et/ou synthétiques.

6. Traverse supérieure (2) de façade avant (1) selon l'une des revendications 1 à 5, **caractérisé en ce qu'**elle comporte des moyens (35) aptes à guider le cheminement, le long d'au moins une partie de cette traverse (2), d'au moins un faisceau électriques destiné à venir se brancher sur un dit au moins un capteur de chocs (26).

7. Traverse supérieure (2) de façade avant (1) selon la revendication 6, caractérisé en ce lesdits moyens de guidage comportent une pluralité d'encoches (35) ménagées dans des parois de ladite traverse (2).

8. Sous-ensemble comportant une traverse supérieure (2) de façade avant (1) selon l'une des revendications 1 à 7, **caractérisé en ce qu'**il comporte également au moins un dit capteur de chocs (26) monté fixement sur une dite interface d'attache (23, 24, 25).

9. Façade avant (1) de véhicule automobile comportant une traverse supérieure (2) destinée à s'étendre horizontalement à l'avant dudit véhicule, ainsi que deux jambages latéraux (3, 4) prévus pour s'étendre verticalement et dont les extrémités supérieures sont reliées fixement aux extrémités latérales de ladite traverse supérieure (2), **caractérisé en ce que** ladite traverse supérieure (2) est conforme à l'une des revendications 1 à 7.

10. Véhicule automobile, **caractérisé en ce qu'**il comporte une façade avant (1) selon la revendication 9.

## Patentansprüche

1. Oberer Querträger (2) der Vorderfront (1) eines Kraftfahrzeugs, der sich horizontal vor dem Fahrzeug erstreckt und mindestens eine Befestigungsschnittstelle (23, 24, 25) für einen Stoßsensor (26) aufweist, wobei die mindestens eine Befestigungsschnittstelle (23, 24, 25) Folgendes umfasst:
- eine Mutter (27), die an einer Öffnung (28) in einer Wand (29, 30, 31) des Querträgers (2) angebracht ist, um eine Schraubbefestigung des Stoßsensors (26) zu ermöglichen, und
- ein längliches Vorpositionierungs- und Indexierungsloch (33), das an der Wand in der Nähe der Mutter (27) angebracht ist und zur Aufnahme eines komplementär geformten Vorsprungs (34) vorgesehen ist, der an demselben Stoßsensor (26) angeordnet ist;
Das Merkmal ist, dass der Querträger (2) eine erste Befestigungsschnittstelle (23), die in seinem mittleren Teil ausgebildet ist, und eine zweite und eine dritte Befestigungsschnittstelle (24, 25), die jeweils an jedem seiner beiden seitlichen Enden ausgebildet sind, aufweist.

2. Oberer Querträger (2) der vorderen Fassade (1) nach Anspruch 1, **dadurch gekennzeichnet, dass** die erste Befestigungsschnittstelle (23) im Wesentlichen in Höhe der vertikalen Längsmittelebene des Querträgers (2) angeordnet ist.

3. Obere Traverse (2) der vorderen Fassade (1) nach einem der Ansprüche 1 oder 2, **dadurch gekennzeichnet, dass** die zweite und die dritte Befestigungsschnittstelle (24, 25) im Wesentlichen symmetrisch zur vertikalen Längsmittelebene der Traverse (2) angeordnet sind.

4. Obere Traverse (2) der vorderen Fassade (1) nach einem der Ansprüche 1 bis 3, **dadurch gekennzeichnet, dass** die Mutter (27) jeder Befestigungsschnittstelle (23, 24, 25) in eine entsprechende Öffnung (28) eingefalzt ist.

5. Obere Traverse (2) der vorderen Fassade (1) nach einem der Ansprüche 1 bis 4, **dadurch gekennzeichnet, dass** sie einen Hauptkörper (7) aufweist, der aus einem einstückigen Formteil aus einem thermoplastischen Material hergestellt ist, das vorteilhafterweise mit natürlichen und/oder synthetischen Fasern gefüllt ist.

6. Obere Traverse (2) der vorderen Fassade (1) nach einem der Ansprüche 1 bis 5, **dadurch gekennzeichnet, dass** sie Mittel (35) aufweist, die geeignet sind, den Weg von mindestens einem elektrischen Strahl entlang mindestens eines Teils dieser Traverse (2) zu führen, der dazu bestimmt ist, an einen der mindestens einen Stoßsensoren (26) anzuschliessen.

7. Oberer Querträger (2) der vorderen Fassade (1) nach Patentanspruch 6, **dadurch gekennzeichnet, dass** die Führungsmittel eine Vielzahl von Kerben (35) aufweisen, die in den Wänden des Querträgers (2) vorgesehen sind.

8. Unterbaugruppe mit einem oberen Querträger (2) der Vorderfront (1) nach einem der Ansprüche 1 bis 7, **dadurch gekennzeichnet, dass** sie außerdem mindestens einen Stoßsensor (26) aufweist, der fest an einer Befestigungsschnittstelle (23, 24, 25) angebracht ist.

9. Vorderseite (1) eines Kraftfahrzeugs mit einem oberen Querträger (2), der dazu bestimmt ist, sich horizontal vor dem Fahrzeug zu erstrecken, sowie zwei Seitenbeinen (3, 4), die dazu vorgesehen sind, sich vertikal zu erstrecken, und deren obere Enden fest mit den seitlichen Enden des oberen Querträgers (2) verbunden sind, **dadurch gekennzeichnet, dass** der obere Querträger (2) einem der Ansprüche 1 bis 7 entspricht.

10. Kraftfahrzeug, **dadurch gekennzeichnet, dass** es eine vordere Fassade (1) nach Anspruch 9 aufweist.

## Claims

1. Front-facing (1) upper cross-member (2) for a motor vehicle intended to extend horizontally in front of said vehicle and comprising at least one attachment interface (23, 24, 25) for impact sensor (26), the at least one attachment interface (23, 24, 25) comprising:
a nut (27) installed at the level of an orifice (28) provided in a wall (29, 30, 31) of said cross-member (2) so as to allow bolting of said shock sensor (26), and
an oblong pre-positioning and indexing hole (33) fitted on said local wall of said nut (27) and designed to receive a protuberance of complementary shape (34) arranged on this same shock sensor (26);
**characterised in that** said crosspiece (2) comprises a first said attachment interface (23) arranged in its central part and second and third said attachment interfaces (24, 25) arranged respectively at each of its two lateral ends.

2. Upper cross-member (2) of front facade (1) according to claim 1, wherein the first said attachment interface (23) is arranged substantially on the level of the median vertical longitudinal drawing of said cross-member (2).

3. Upper cross-member (2) of front facade (1) according to either of Claims 1 and 2, **characterised in that** the said second and third attachment interfaces (24, 25) are arranged substantially symmetrically with respect to the median vertical longitudinal drawing of the said cross-member (2).

4. Upper cross-member (2) of front panel (1) according to one of Claims 1 to 3, **characterised in that** the nut (27) of each said attachment interface (23, 24, 25) is crimped into a said corresponding orifice (28).

5. Upper cross-member (2) of front facade (1) according to one of Claims 1 to 4, **characterised in that** it comprises a main body (7) moulded in a single component from a thermoplastic material advantageously loaded of natural and/or synthetic fibres.

6. Upper cross-member (2) of front facade (1) according to one of Claims 1 to 5, **characterised in that** it comprises means (35) capable of guiding the path, along at least a part of this cross-member (2), of at least one electrical harness intended to be connected to one of said at least one shock sensor (26).

7. Upper cross-member (2) for the front façade (1) according to claim 6, **characterised in that** the said guide means comprise a plurality of notches (35) formed in the walls of the said cross-member (2).

8. Subassembly comprising an upper cross-member (2) of the front facade (1) according to one of Claims 1 to 7, **characterised in that** it also comprises at least one said shock sensor (26) mounted fixedly on one said attachment interface (23, 24, 25).

9. Front facade (1) of a motor vehicle comprising an upper cross-member (2) intended to extend horizontally in front of said vehicle, and two lateral legs (3, 4) intended to extend vertically and the upper ends of which are fixedly connected to the lateral ends of said upper cross-member (2), **characterised in that** said upper cross-member (2) is in accordance with one of Claims 1 to 7.

10. Motor vehicle, **characterised in that** it comprises a front facade (1) according to Claim 9.
